# EUROPEAN PATENT SPECIFICATION

(11) **EP 0 918 630 B1**
(45) Date of publication and mention of the grant of the patent: **26.07.2000**
(21) Application number: 97936769.5
(22) Date of filing: 13.08.1997
(51) Int. Cl.: B32B 21/10, B27D 1/00

(54) **WATER RESISTANT WOOD VENEER LAMINATES**
WASSERBESTÄNDIGER SCHICHTWERKSTOFF AUS HOLZFURNIER
STRATIFIE A BASE DE MATIERE A MOULER CONTENANT DES COPEAUX DE BOIS, RESISTANT A L'EAU

(30) Priority: 14.08.1996 GB 9617040
(43) Date of publication of application: 02.06.1999
(73) Proprietor: BLP Group PLC, Kirk Sandall, Doncaster DN3 1QR (GB)
(72) Inventor: CLARKE, Peter, Arthur, Bearsted Maidstone Kent ME14 4PU (GB)
(74) Representative: Newell, William Joseph
(86) International application number: GB9702168
(87) International publication number: WO9806569

(56) References cited:
- EP-A- 0 564 044
- DE-A- 3 421 655
- FR-A- 2 652 539
- GB-A- 2 204 074
- NL-A- 8 302 772
- US-A- 3 909 342
- US-A- 3 916 059
- US-A- 3 960 639
- US-A- 4 256 798
- US-A- 4 430 371
- PATENT ABSTRACTS OF JAPAN vol. 018, no. 398 (M-1645), 26 July 1994 & JP 06 115008 A (HOKUSAN KK), 26 April 1994,
- DATABASE WPI Section Ch, Week 9402 Derwent Publications Ltd., London, GB; Class A25, AN 94-011790 XP002050029 & JP 05 318 673 A (MITSUI TOATSU CHEM INC) , 3 December 1993

## Description

This invention relates to wood veneer laminates and in particular, but not exclusively, to water-resistant flexible real wood veneer laminates for profile wrapping. The invention also extends to methods for producing a wood veneer laminate, methods for applying a wood veneer to a profile or substrate, to profiles or substrates to which said laminate has been applied, and to articles or structures incorporating said profiles or substrates.

Real wood veneers have been used for many years to be wrapped around various substrates or profiles to produce wrapped mouldings for the furniture and architectural industries. These mouldings can have sections of intricate shape for moulded cornices, pelmets, architraves, window frame components etc, and so the laminate must be sufficiently flexible to follow closely abrupt changes in section, small radii of curvature etc, without cracking or leaving substantial voids. The wrapping process requires that the veneer is sanded to a very thin depth so as to achieve the necessary level of flexibility and this can only be achieved if the veneer is first reinforced by a suitable backing material.

Traditionally, profile wrapping veneers have been made using a continuous sheet or layer of a non-woven 70% cellulose/ 30% long fibre polyester/binder impregnated with a Polyvinyl acetate (PVAc) adhesive which is then laminated to rolls of veneer using a PVAc or other thermoplastic adhesive. Increased water-resistance is achieved by utilising cross linked adhesives for impregnation and/or lamination but this is inevitably at the expense of reduced flexibility. These traditional techniques are not capable of producing a sufficiently water resistant and flexible veneer continuous roll or strip product suitable for applications where high levels of water might be encountered, such as window frames. Also the production of this conventional material requires impregnation of the backing material prior to laminating to the wood veneer.

This has greatly limited the effective utilisation of real wood veneer in a large market sector despite the enormous aesthetic qualities of genuine wood veneer. We have developed a wood veneer/backing material laminate which overcomes at least some of the above difficulties and which provides an effective method of producing exceptional water resistance whilst maintaining a high degree of flexibility in continuous real wood veneer rolls or veneer strips suitable for wrapping products such as window frames.

FR-A-2 652 539 describes a multi-layer laminate made up of five layers, in which the webs are continuous. There is no suggestion of a backing in the form of a spun laid web, nor any indication that a special adhesive is used.

DE - A - 3 421 655 discloses one arrangement in which a wood veneer is backed by a coarse meshed woven lattice of glass-fibre material impregnated with polyvinyl acetate.

US=A-4 430 371 discloses a method in which a number of veneer sheets are bonded to a non-woven sheet material and then finger jointed with adhesive and bonded to a plastic composite foil. The adhesive used is acrylic and there is no suggestion of a spun laid web backing.

Accordingly, in one aspect, this invention provides a flexible water-resistant laminate comprising a wood veneer bonded by means of a flexible moisture curing polyurethane-based water-resistant adhesive to generally discontinuous web of spun-laid water-resistant synthetic fibres.

The synthetic fibres making up the web are preferably selected from the group comprising polyester, rayon (regenerated cellulose), nylon (polyamide), or mixtures thereof. A particularly preferred web is made of a bi-component filament comprising a core polyester fibre and a nylon skin.

The spun laid web can provide sufficient support and reinforcement to the wood veneer during subsequent sanding and wrapping processes, whilst providing a finished laminate which is relatively flexible and which has a greatly reduced tendency for cracking. In addition, the open texture of such a web allows adhesive to permeate the web and surround the fibres thereof when the veneer and web are bonded. In a particularly preferred embodiment, the web comprises a thermally bonded spun laid fibre.

Unlike in the conventional materials, the flexible web is preferably applied to the wood veneer without any pre-impregnation of the web, thereby removing a process step. However, we do not exclude the possibility of a pre-impregnation step.

The polyurethane-based adhesive gives a good combination of flexibility and water-resistance.

Preferably, the thickness of the laminate prior to application to a substrate lies in the range of from 0.25mm to 0.70mm, and more preferably in the range of 0.25mm to 0.35mm. These thicknesses will of course be set very much by the particular application for which the laminate is intended, the nature of the real wood veneer and the amount of sanding applied. Thus for wrapping a profile with sharp curves a thickness of between 0.25mm and 0.35mm would be preferred, but for softer curves a thickness in the range of from 0.35mm to 0.45mm and for a flat surface 0.45mm upwards would be suitable in most cases.

According to another aspect of this invention, there is provided a method for producing a flexible water-resistant laminate which comprises supplying a wood veneer from a roll thereof, applying a water-resistant moisture curing polyurethane hot melt adhesive to one side of said wood veneer, and applying a generally discontinuous web of spun laid non-woven water-resistant synthetic fibres to said adhesive surface whilst still tacky, thereby to bond said wood veneer to said discontinuous web, to produce said water-resistant laminate.

According to a further aspect of this invention, there is provided a method of wrapping a profile or substrate which in use will be subject to wet conditions, which comprises wrapping said profile using a laminate comprising a wood veneer bonded by means of a generally flexible water-resistant moisture curing polyurethane-based hot melt adhesive to a flexible web consisting wholly or principally of waterproof or water-resistant fibres.

The invention also extends to a profile or substrate with a wood veneer applied as described above, as well as to articles or structures incorporating a profile or substrate wrapped with a wood veneer as described above.

The invention will now be described by reference to the following non-limiting example, reference being made to the accompanying drawings, in which:
Figure 1 is a schematic section view through a wood veneer laminate in accordance with this invention, and
Figure 2 is a schematic diagram of apparatus for producing a wood veneer laminate in accordance with this invention.

### Example

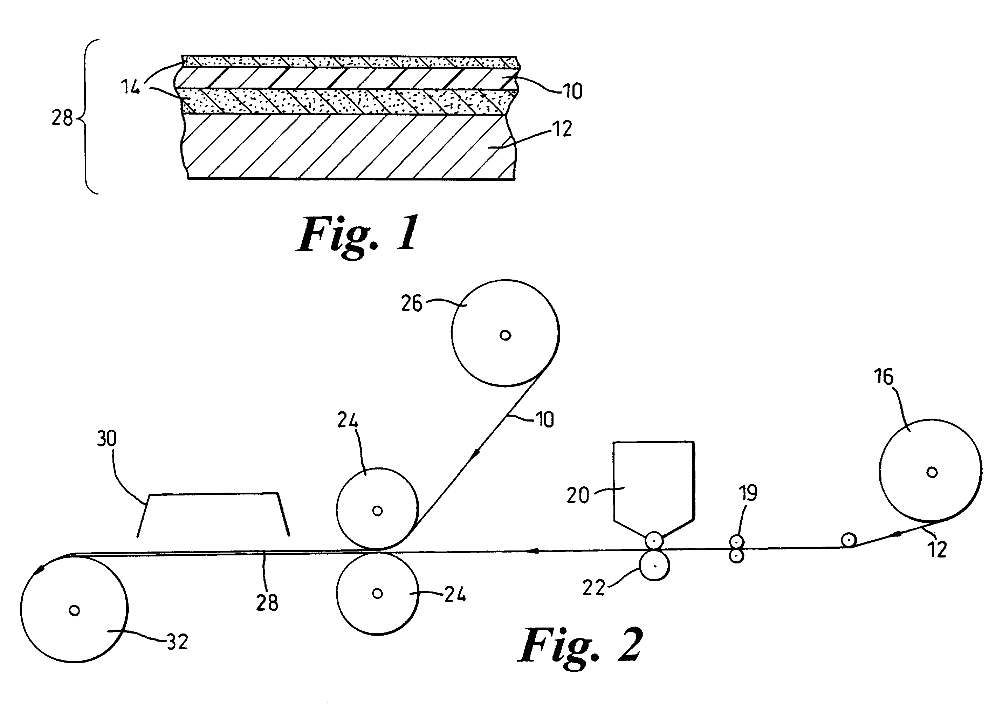

A spun-laid web of bi-component filament (10) (AKZO Nobel - Colback® W30) comprising core polyester and skin polyamide 6 (nylon) was laminated to a continuous roll of white oak veneer (12) 180mm wide using a polyurethane-based hot melt adhesive (14)(Rakoll®PU 48/S from H.B. Fuller GmbH (previously identified as PU1/105b)) in accordance with the manufacturer's directions. Figure 1 is a schematic section view of the laminate so formed. The Colback® W30 is a spun laid non-woven thermally bonded material. It provides a generally uniform open structure; a high tensile strength per unit weight; isotropic characteristics; dimensional and thermal stability; no chemical binder, and a high affinity for coating compounds. The manufacturer's data sheet for the above product indicates the following properties

| | | |
|---|---|---|
| Mass/unit area | DIN 53854 | 30 g/m² |
| Thickness | DIN 53855 | 0.2mm |
| Breaking Strength | DIN 53857 | 55 N/5cm |

In this example, the adhesive is a moisture curing reactive polyurethane hot melt. It is solid when cold and consists of EVA (ethylene vinyl acetate) adhesive, a prepolymer and isocynanate radicals. When the adhesive is heated, the EVA melts and forms an initial bond. The curing reaction of the polyurethane is also started and crosslinking continues by using moisture from the atmosphere.

Referring to Figure 2, the veneer 12 is fed off a veneer off-wind 16 over a feed roller and a tracking device 19 to a conventional wide hot melt applicator 20 which includes a pressure roller 22 and applies a thin continuous layer of adhesive at a temperature typically in the range 100-140°C to the rear surface of the veneer. Whilst the adhesive is still wet or tacky the veneer passes between a pair of chilled pressure rolls 24 together with the spun laid web 10 which is fed from a non-woven off-wind 26, to cause the web 10 to be firmly pressed down into the layer of wet or tacky adhesive and to firmly bond thereto. The laminate 28 so formed then passes through a forced air cooling zone 30 to ensure that the adhesive is non-tacky before the laminate is wound onto a drum at a rewind station 32.

The resulting laminate is water-resistant such that the bond between the veneer and backing material remained satisfactory even after the product was immersed in a bucket of water.

The product is then sanded to a thickness selected to provide the required flexibility, having regard to the curvature to which the veneer will be subjected in use. Following sanding, using the same polyurethane adhesive as for veneer lamination (Rakoll®PU 48/S), the laminate was easily wrapped around a window frame component comprising a primed unplasticised polyvinyl chloride (UPVC) as a core material. This lamination was carried out on a standard Barberan profile laminating machine using processing parameters well known to those skilled in the art, and the resulting window frame was both aesthetically satisfactory - without any cracking of the veneer - and highly water resistant.

It should be appreciated that any species of real wood veneer may be used in either continuous rolls or veneer strips, and any width of veneer is treatable subject only to the limitations of the machinery required.

The wrapping process may be applied to a wide variety of core materials such as medium density fibre board (MDF), chipboard, solid or laminated wood, unplasticised polyvinyl chloride (UPVC), aluminium, other plastics extrusions etc.

Likewise, the invention is not limited to any particular form of profile laminating machine, as any machine which has the facility to use the suitable adhesive can be employed, e.g. Fritz, Berg, Duspohl or other machines operating on similar principles, in addition to the Barberan machine used in the example.

It should be noted that the invention may be performed using many other different types of adhesives to provide a laminate which is sufficiently robust to withstand sanding to a required thickness if required and capable of flexing as necessary to follow a particular profile without cracking. Thus other polyurethane-based systems may be used such as water or solvent based systems. In a solvent-based system one part of the adhesive system (containing hydroxyl groups) is carried in a solvent (typically methylene chloride) to which is added a catalyst (containing free isocynanate radicals). As soon as the catalyst is added, the mixture starts to cross-link but the solvent allows it to remain liquid long enough to enable application to whatever medium is required. The solvent is then evaporated (normally in a heat tunnel) to increase the viscosity of the mixture to give it an initial "tack" to form the initial adhesive bond when applied to a substrate. Subsequent adhesive bond strength is increased as the chemical crosslinking takes place in the laid film. Water based systems work in a similar way with water as the solvent, but the water takes longer to evaporate. Likewise, adhesive systems other than those based on polyurethanes may be used.

Although in the above example a web of synthetic fibres is used, the invention extends also to webs of naturally occurring waterproof or water-resistant fibres which are capable of withstanding prolonged exposure to moisture in use.

## Claims

1. A flexible water-resistant laminate comprising a wood veneer bonded by means of a flexible water-resistant moisture curing polyurethane-based hot melt adhesive to a generally discontinuous web of spun laid, non-woven, water-resistant synthetic fibres.

2. A laminate according to Claim 1, wherein the synthetic fibres making up said web are selected from the group of synthetic fibres comprising polyester, rayon, nylon fibres or mixtures thereof.

3. A laminate according to Claim 2, wherein said synthetic fibres consist of a bi-component filament comprising a polyester core and a nylon outer layer.

4. A laminate according to any preceeding Claim having a thickness in the range of from 0.25mm to 0.70mm.

5. A laminate according to Claim 4 having a thickness in the range of from 0.25mm to 0.35mm.

6. A method for producing a flexible water-resistant laminate which comprises supplying a wood veneer from a roll thereof, applying a water-resistant moisture curing polyurethane hot melt adhesive to one side of said wood veneer, and applying a generally discontinuous web of spun laid non-woven water-resistant synthetic fibres to said adhesive surface whilst still tacky, thereby to bond said wood veneer to said discontinuous web, to produce said water-resistant laminate.

7. A method according to Claim 6, comprising sanding said laminate to a required thickness after said bonding.

8. A method of wrapping a profile or substrate which in use will be subject to wet conditions, which comprises wrapping said profile using a laminate comprising a wood veneer bonded by means of a generally flexible water-resistant moisture curing polyurethane-based hot melt adhesive to a flexible web consisting wholly or principally of waterproof or water-resistant fibres.

9. A profile or substrate with a wood veneer applied in accordance with Claim 8.

10. An article or structure incorporating a profile or substrate in accordance with Claim 9.

## Patentansprüche

1. Flexibler wasserbeständiger Schichtwerkstoff, umfassend ein Holzfurnier, das mit Hilfe eines flexiblen, wasserbeständigen, durch Feuchtigkeit abbindenden Schmelzmasse-Bindemittels auf Polyurethanbasis mit einer allgemein diskontinuierlichen Bahn von gesponnenen gelegten, nicht verwebten, wasserbeständigen Kunststofffasern verbunden ist.

2. Schichtwerkstoff nach Anspruch 1, bei dem die Kunststofffasern, die die Bahn bilden, aus der Gruppe von Kunststofffasern ausgewählt sind, die Polyester, Kunstseide, Nylonfasern oder Gemische hiervon umfasst.

3. Schichtwerkstoff nach Anspruch 2, bei dem die Kunststofffasern aus einem Zweikomponentenfilament bestehen, das einen Polyesterkem und einen Nylonmantel umfaßt.

4. Schichtwerkstoff nach einem der vorhergehenden Ansprüche, der eine Dicke im Bereich von 0,25 bis 0,70 mm hat.

5. Schichtwerkstoff nach Anspruch 4, der eine Dicke im Bereich von 0,25 bis 0,35 mm hat.

6. Verfahren zum Herstellen eines flexiblen wasserbeständigen Schichtwerkstoffs, umfassend die Verfahrensschritte, dass man ein Holzfurnier von einer Holzfumierrolle heranliefert, ein wasserbeständiges, durch Feuchtigkeit abbindendes Polyurethan-Schmelzmassen-Bindemittel auf einer Seite des Holzfurniers aufträgt und auf diese Bindemittelfläche, während sie noch klebrig ist, eine allgemein diskontinuierliche Bahn aus gesponnenen gelegten nicht-gewebten wasserbeständigen Kunststofffasern aufbringt, wodurch man das Holzfurnier zum Erzeugen des wasserbeständigen Schichtwerkstoffs mit der diskontinuierlichen Bahn verbindet.

7. Verfahren nach Anspruch 6, umfassend den Verfahrensschritt, dass man den Schichtwerkstoff nach dem Verbinden auf eine geforderte Dicke schleift.

8. Verfahren zum Verkleiden eines Profils oder Substrats, das im Gebrauch nassen Bedingungen unterworfen sein wird, umfassend die Verfahrensschritte, dass man das Profil unter Verwendung eines Schichtwerkstoffs verkleidet, der ein Holzfurnier umfasst, das mit Hilfe eines allgemein flexiblen wasserbeständigen durch Feuchtigkeit abbindenden Schmelzmassen-Bindemittels auf Polyurethanbasis mit einer flexiblen Bahn, die vollständig oder im wesentlichen aus wasserfesten oder wasserbeständigen Fasern besteht, verbunden ist.

9. Profil oder Substrat mit einem Holzfurnier, das gemäß Anspruch 8 aufgebracht worden ist.

10. Gegenstand oder Struktur, beinhaltend ein Profil oder ein Substrat gemäß Anspruch 9.

## Revendications

1. Stratifié résistant à l'eau, flexible, comprenant une feuille de placage de bois liée au moyen d'un adhésif thermofusible, à base de polyuréthanne, durcissant sous l'effet de l'humidité, résistant à l'eau, flexible, à une bande généralement discontinue de fibres synthétiques résistantes à l'eau, non tissées, disposées en nappe à l'état filé.

2. Stratifié selon la revendication 1, dans lequel les fibres synthétiques composant ladite bande sont choisies dans le groupe des fibres synthétiques comprenant les fibres de polyester, de rayonne, de Nylon ou leurs mélanges.

3. Stratifié selon la revendication 2, dans lequel lesdites fibres synthétiques consistent en un filament bi-composants comprenant une âme en polyester et une couche externe de Nylon.

4. Stratifié selon l'une quelconque des revendications précédentes, ayant une épaisseur se situant dans la plage allant de 0,25 mm à 0,70 mm.

5. Stratifié selon la revendication 4, ayant une épaisseur se situant dans la plage allant de 0,25 mm à 0,35 mm.

6. Procédé de fabrication d'un stratifié résistant à l'eau, flexible, qui comprend les opérations consistant à dérouler une feuille de placage de bois à partir d'un rouleau de celle-ci, à appliquer un adhésif thermofusible, à base de polyuréthanne, durcissant sous l'effet de l'humidité, résistant à l'eau, sur l'une des faces de ladite feuille de placage de bois, et à appliquer une bande généralement discontinue de fibres synthétiques, résistantes à l'eau, non tissées, disposées en nappe à l'état filé, sur ladite surface adhésive alors qu'elle est encore collante, pour lier de cette façon ladite feuille de placage de bois à ladite bande discontinue, afin d'obtenir ledit stratifié résistant à l'eau.

7. Procédé selon la revendication 6, comprenant le ponçage dudit stratifié jusqu'à une épaisseur requise après ladite liaison.

8. Procédé d'emballage d'un profilé ou d'un substrat, lequel, à l'utilisation, sera soumis à des conditions humides, qui comprend les opérations consistant à emballer ledit profilé à l'aide d'un stratifié comprenant une feuille de placage de bois liée au moyen d'un adhésif thermofusible, à base de polyuréthanne, durcissant sous l'effet de l'humidité, résistant à l'eau, généralement flexible, sur une bande flexible constituée entièrement ou principalement de fibres imperméables à l'eau ou résistantes à l'eau.

9. Profilé ou substrat avec une feuille de placage de bois appliquée conformément à la revendication 8.

10. Article ou structure incorporant un profilé ou un substrat tel que défini à la revendication 9.
